# EUROPEAN PATENT SPECIFICATION

(11) **EP 4 418 494 B1**
(45) Date of publication and mention of the grant of the patent: **01.07.2026**
(21) Application number: 24167656.8
(22) Date of filing: 14.04.2017
(51) Int. Cl.: H02J 50/12, H02J 7/00, B60M 7/00, H02J 50/90

(54) **WIRELESS POWER SUPPLY DEVICE**
DRAHTLOSE STROMVERSORGUNGSVORRICHTUNG
DISPOSITIF D'ALIMENTATION ÉLECTRIQUE SANS FIL

(30) Priority: 20.04.2016 JP 2016084791
(43) Date of publication of application: 21.08.2024
(62) Divisional of application: 17785910.5
(73) Proprietor: Yamaha Hatsudoki Kabushiki Kaisha, Iwata-shi, Shizuoka 438-8501 (JP)
(72) Inventor: MIYAZAKI, Toshinori, Iwata-shi, Shizuoka 438-8501 (JP)
(74) Representative: Pfitzner, Hannes

(56) References cited:
- EP-A1- 2 833 514
- EP-A1- 2 908 405
- JP-A- 2012 005 238
- US-A1- 2011 196 544
- US-A1- 2015 155 095
- US-A1- 2016 094 074

## Description

### TECHNICAL FIELD

The present teaching relates to wireless power supply devices that transmit electric power wirelessly from a transmitter coil to a receiver coil.

### BACKGROUND ART

In recent years, wireless power supply technology has found applications in a wide variety of fields. One example is power supply systems for vehicles. Research has been conducted to supply electric power wirelessly to batteries of the vehicles.

Straddled vehicles, such as bicycles and motorcycles, are widely used, irrespective of age or sex, as convenient means of transportation. Recent years have seen increasing use of straddled vehicles equipped with a motor that generates a driving force to be transmitted to wheels. Such straddled vehicles include, for example, electrically power-assisted bicycles that assist the rider in pedaling with a motor's driving force.

The electrically power-assisted bicycles have a battery that supplies electric power to the motor. The battery is detachably mounted. The battery is charged through a commercial power source. Charging the battery requires use of a dedicated adapter.

Generally, the battery of the electrically power-assisted bicycles is charged at home. However, it would be convenient if the battery could be charged at, for example, public bicycle parking spaces. Bicycle parking spaces in particular with a wireless power transfer system installed therein allow the battery to be charged without requiring a separate charging operation.

Japanese Unexamined Patent Application Publication No. 2012-34487 describes an electrically power-assisted bicycle with a wirelessly rechargeable battery. In this publication, the electrically power-assisted bicycle has a receiver coil in a front basket thereof. The receiver coil is shaped like a ring. A transmitter coil is placed on a pole provided in a bicycle parking space. Power is transferred from the transmitter coil to the receiver coil utilizing magnetic resonance between the receiver coil and transmitter coil. The transferred power is stored in the battery. Document EP2833514 discloses the duty cycle control of a wireless power transmitter regarding the current and the voltage sensed on the primary. These quantities depend on the distance between the transmitter and the receiver .

### CITATION LIST

### PATENT DOCUMENT

Patent Document 1: Japanese Patent Application Publication No. 2012-034487

### SUMMARY OF INVENTION

### TECHNICAL PROBLEM

One thing found in the wireless power supply for the straddled vehicle, such as the electrically power-assisted bicycle, was that the relative position of the transmitter coil with respect to the receiver coil was prone to change during the transmission of power. The inventor of this teaching therefore studied for a power supply system capable of transmitting power even when the relative positions of the transmitter coil and receiver coil have changed. However, a prototype of the power supply system tolerating the relative position changes was accompanied with a very large power transmission device.

An object of the present teaching is to provide a wireless power supply device that can tolerate changes in relative positions of the transmitter coil and the receiver coil, while suppressing increase in size of the device.

### SOLUTION TO PROBLEM AND ADVANTAGEOUS EFFECTS OF INVENTION

The inventor of this teaching studied for a wireless power supply system capable of transmitting power even if the relative positions of the transmitter coil and the receiver coil have changed during the transmission of the power. The inventor presets an estimated range of relative positions of the transmitter coil and the receiver coil during the actual transmission of power. Then, the inventor conducted power transmission tests while displacing the transmitter coil relative to the receiver coil within the preset range. The test results showed that the degree of coupling between the transmitter coil and the receiver coil is lowered at some positions. The transmitter coil at such positions could not transmit desired power. To maintain a certain coupling degree irrespective of changes in relative position, the inventor attempted to upsize the transmitter coil and the receiver coil. As a result, transmission of desired power was achieved even if the relative positions changed within the preset range.

Generally, in wireless power supply, the transmitter coil tends to be large to improve the coupling degree between the transmitter coil and the receiver coil located apart from each other. To tolerate the changes in relative positions of the transmitter coil and the receiver coil in this circumstance, the transmitter coil may be further upsized. The inventor therefore pursued research for configurations that tolerate changes in relative positions without upsizing the transmitter coil.

The inventor conducted tests while gradually downsizing the transmitter coils. Some small transmitter coils became excessively hot when the transmitter coils were displaced relative to the receiver coils during transmission of power. To track the cause of the heat generation in the transmitter coils, the inventor pursued further investigation.

The investigation revealed that the relative position change between the transmitter coil and the receiver coil occasionally affected the current flowing through the transmitter coil. For instance, a transmitter coil at some positions with respect to the receiver coil exhibited a reduction in power transmission efficiency as well as an increase in current flowing therethrough. It is also found that the current increase in the transmitter coil causes excessive heat generation in the transmitter coil.

As a result of elaborate studies, the inventor has arrived at the idea of controlling the amount and direction of the current flowing through the transmitter coil that configures a resonant circuit. The inventor has discovered that the control of the amount and direction of the current can reduce transmission efficiency deterioration and heat generation in the transmitter coil caused by changes in the relative positions.

Specifically, a transmitter core around which the transmitter coil is wound is provided. This transmitter coil and a transmitter capacitor make up a transmitter resonant circuit. A switching element that controls a current flowing through the transmitter coil in a first direction, and a switching element that controls a current flowing through the transmitter coil in a second direction, which is opposite to the first direction, are provided. The two switching elements are controlled with individual signals, respectively. In other words, switching signals of two systems are introduced. Furthermore, the duty ratios of the two-system switching signals are changed according to relative positions of the transmitter coil and the receiver coil. This can control the amount and direction of the current flowing through the transmitter coil according to relative positions of the transmitter coil and the receiver coil. By controlling the magnitude and direction of the current in the transmitter coil, which makes up the resonant circuit, according to relative positions, deterioration of transmission efficiency and heat generation in the transmitter coil due to changes in the relative positions can be reduced. Based on the findings, the inventor has conceived the following embodiment.

### (First Configuration)

The wireless power supply device according to the first configuration of an embodiment of the present teaching is a wireless power supply device including a transmitter coil wirelessly transmitting electric power to a receiver coil. The wireless power supply device includes a transmitter resonant circuit having a transmitter capacitor and the transmitter coil, a transmitter core around which the transmitter coil is wound, a drive circuit controlling current to be supplied to the transmitter resonant circuit, and a control unit. The drive circuit includes a first switching element controllably turned ON/OFF based on a first PWM signal, and a second switching element controllably turned ON/OFF based on a second PWM signal. The control unit supplies the first PWM signal to the first switching element, and supplies the second PWM signal to the second switching element. The first switching element switches the drive circuit such that a current flows through the transmitter coil in a first direction when the first switching element is ON. The second switching element switches the drive circuit such that the current flows through the transmitter coil in a second direction, which is opposite to the first direction, when the second switching element is ON. The control unit changes the duty ratio of the first PWM signal, which is supplied to the first switching element to switch ON/OFF the current flowing through the transmitter coil in the first direction, and the duty ratio of the second PWM signal, which is supplied to the second switching element to switch ON/OFF the current flowing through the transmitter coil in the second direction, according to relative positions of the transmitter coil and the receiver coil whose current flowing therethrough changes with a change of the current flowing through the transmitter coil (first configuration).

In the first configuration, the control unit changes the duty ratios of the first PWM signal controlling the first switching element and the second PWM signal controlling the second switching element according to relative positions of the transmitter coil and the receiver coil. This can control the amount and direction of the current flowing through the transmitter coil according to relative positions of the transmitter coil and the receiver coil. In the first configuration, the transmitter coil, which is wound around the transmitter core, and the transmitter capacitor make up the transmitter resonant circuit, and the direction and magnitude of the current in the transmitter coil are controlled according to relative positions of the transmitter coil and the receiver coil. This configuration reduces transmission efficiency deterioration and heat generation in the transmitter coil caused by changes in relative positions. Thus, this configuration can wirelessly supply electric power without making the transmitter coil large, while tolerating changes in relative positions. Consequently, the wireless power supply device can avoid becoming large, and also tolerate changes in relative positions of the transmitter coil and the receiver coil.

### (Second Configuration)

In the above-described first configuration, the pulse width of the first PWM signal that turns ON the first switching element and the pulse width of the second PWM signal that turns ON the second switching element can be made substantially equal to each other (second configuration).

The inventor repeatedly conducted power transmission tests while changing the relative positions of the transmitter coil and the receiver coil, and found that there was relative positions where the transmitter coil produced intense heat. The inventor discovered that the heat at such specific relative positions can be reduced by making the pulse width of the first PWM signal and the pulse width of the second PWM signal substantially equal to each other. The first PWM signal and second PWM signal whose pulse widths are substantially equal to each other can maintain the balance between the current flowing through the transmitter coil in the first direction and the current flowing in second direction, which is opposite to the first direction. This can effectively reduce the heat in the transmitter coil wound around the transmitter core.

### (Third Configuration)

In the above-described first or second configurations, the first PWM signal and the second PWM signal can be opposite in phase (third configuration). This means that the phase difference between the first PWM signal and the second PWM signal can be set to 180 degrees.

The third configuration further equalizes the currents flowing through the transmitter coil in the first direction and in the second direction. This can effectively reduce transmission efficiency deterioration and heat generation in the transmitter coil.

### (Fourth Configuration)

In the above-described third configuration, both the first PWM signal and the second PWM signal may have a duty ratio of 50% for a period of time (fourth configuration).

### (Fifth Configuration)

In any of the above-described first to fourth configurations, the control unit can control the duty ratios of the first PWM signal and the second PWM signal based on the current in the transmitter resonant circuit or in the drive circuit (fifth configuration).

The current in the transmitter resonant circuit or the drive circuit reflects the relative positions of the transmitter coil and the receiver coil. Because of this, the duty ratios can be changed according to the relative positions by controlling the duty ratios of the first and second PWM signals based on the current.

### (Sixth Configuration)

In any of the above-described first to fourth configurations, the transmitter coil can be a solenoid type (sixth configuration). This can increase the tolerance to changes in relative positions of the transmitter coil and the receiver coil. In addition, the solenoid-type transmitter coil can effectively reduce heat generation in the transmitter coil and the transmitter core.

### (Seventh Configuration)

In any of the above-described first to sixth configurations, the control unit may detect a physical quantity that changes according to relative positions of the transmitter coil and the receiver coil whose current flowing therethrough changes with a change of the current flowing through the transmitter coil, and, based on the detected physical quantity, may change the duty ratio of the first PWM signal that is supplied to the first switching element to switch ON/OFF the current flowing through the transmitter coil in the first direction and the duty ratio of the second PWM signal that is supplied to the second switching element to switch ON/OFF the current flowing through the transmitter coil in the second direction.

### (Eighth Configuration)

In the above-described seventh configuration, when the control unit detects a change in the physical quantity that changes according to relative positions of the transmitter coil and the receiver coil, the control unit may change the duty ratios of the first PWM signal and the second PWM signal according to the change in the physical quantity.

### (Ninth Configuration)

In any of the above-described first to eighth configurations, the control unit may increase the duty ratios of the first PWM signal and the second PWM signal when the relative positions of the transmitter coil and the receiver coil are changed to increase the coupling degree between the transmitter coil and the receiver coil, while the control unit may decrease the duty ratios of the first PWM signal and the second PWM signal when the relative positions of the transmitter coil and the receiver coil are changed to decrease the coupling degree between the transmitter coil and the receiver coil.

### (Tenth Configuration)

In any of the above-described first to eighth configurations, the control unit may decrease the duty ratios of the first PWM signal and the second PWM signal when the relative positions of the transmitter coil and the receiver coil are changed to increase the coupling degree between the transmitter coil and the receiver coil, while the control unit may increase the duty ratios of the first PWM signal and the second PWM signal when the relative positions of the transmitter coil and the receiver coil are changed to decrease the coupling degree between the transmitter coil and the receiver coil.

The embodiment of the present teaching also includes a method of controlling the wireless power supply device. The wireless power supply device includes a transmitter resonant circuit having a transmitter capacitor and a transmitter coil, and a transmitter core around which the transmitter coil is wound, and transmits electric power wirelessly from the transmitter coil to a receiver coil. The control method includes a step of controlling ON/OFF of a first switching element based on a first PWM signal and feeding a current through the transmitter coil in a first direction when the first switching element is ON, and a step of controlling ON/OFF of a second switching element based on a second PWM signal and feeding a current through the transmitter coil in a second direction, which is opposite to the first direction, when the second switching element is ON. The duty ratio of the first PWM signal, which is supplied to the first switching element to switch ON/OFF the current flowing through the transmitter coil in the first direction, and the duty ratio of the second PWM signal, which is supplied to the second switching element to switch ON/OFF the current flowing through the transmitter coil in the second direction, are changed according to relative positions of the transmitter coil and the receiver coil whose current flowing therethrough changes with a change in the current flowing through the transmitter coil.

### BRIEF DESCRIPTION OF DRAWINGS

FIG. 1 illustrates a configuration example of a power supply system including a wireless power supply device according to an embodiment.
FIG. 2 is a perspective view showing a configuration example of a transmitter coil and a receiver coil.
FIG. 3 illustrates examples of signal waveforms of first and second PWM signals.
FIG. 4 illustrates an example of a waveform of a current flowing through the transmitter coil when an inverter is driven with the PWM signals P1, P2 shown in FIG. 3.
FIG. 5 illustrates examples of signal waveforms of PWM signals of one system when the inverter in FIG. 1 is controlled with the PWM signals.
FIG. 6 illustrates an example of a waveform of a current flowing through the transmitter coil when the inverter is driven with the PWM signals shown in FIG. 5.
FIG. 7 illustrates examples of waveforms of the first and second PWM signals whose duty ratios are both set to 50%.
FIG. 8 describes the wireless power supply device according to the embodiment.

### Description of Embodiment

With reference to the drawings, a power supply system according to an embodiment of the present teaching will be described below. The same or similar components are denoted by the same reference symbols or reference numerals throughout the drawings and the description thereof will not be reiterated.

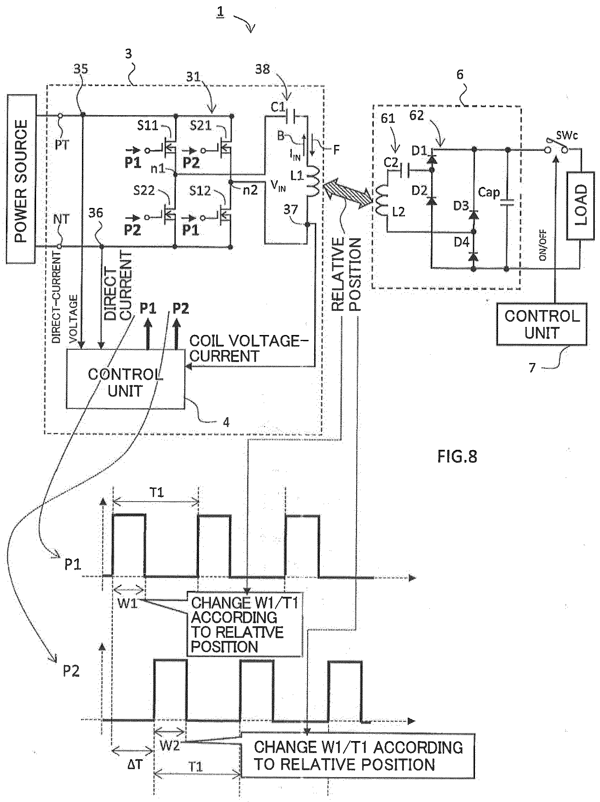

FIG. 8 describes a wireless power supply device 1 according to the embodiment of the present teaching. The wireless power supply device 1 includes a transmitter coil L1 that wirelessly transmits electric power to a receiver coil L2. The wireless power supply device 1 includes a transmitter resonant circuit 38 including a transmitter capacitor C1 and the transmitter coil L1, a transmitter core around which the transmitter coil L1 is wound, a drive circuit 31 controlling current to be supplied to the transmitter resonant circuit 38, and a control unit 4. The drive circuit 31 includes first switching elements S11, S12 controllably turned ON/OFF based on a first PWM signal P1, and second switching elements S21, S22 controllably turned ON/OFF based on a second PWM signal P2. The control unit 4 supplies the first PWM signal P1 to the first switching elements S11, S12, and supplies the second PWM signal P2 to the second switching elements S21, S22.

The first switching elements S11, S12 switch the drive circuit 31 to cause a current to flow through the transmitter coil L1 in a first direction F when the first switching elements S11, S12 are ON. In other words, the first switching elements S11, S12 switch ON/OFF the current flowing through the transmitter coil L1 in the first direction F. The second switching elements S21, S22 switch the drive circuit 31 to cause a current to flow through the transmitter coil L1 in a second direction B, which is opposite to the first direction F, when the second switching elements S21, S22 are ON. In other words, the second switching elements S21, S22 switch ON/OFF the current flowing through the transmitter coil L1 in the second direction B. A change in the current in the transmitter coil L1 under control of the drive circuit 31 changes a current in the receiver coil L2. Consequently, electric power is supplied from the transmitter coil L1 to the receiver coil L2. The control unit 4 changes the duty ratio (W1/T1) of the first PWM signal P1 to be supplied to the first switching elements S11, S12, and the duty ratio (W2/T1) of the second PWM signal P2 to be supplied to the second switching elements S21, S22 according to relative positions of the transmitter coil L1 and the receiver coil L2.

### [Configuration Example of Power Supply System]

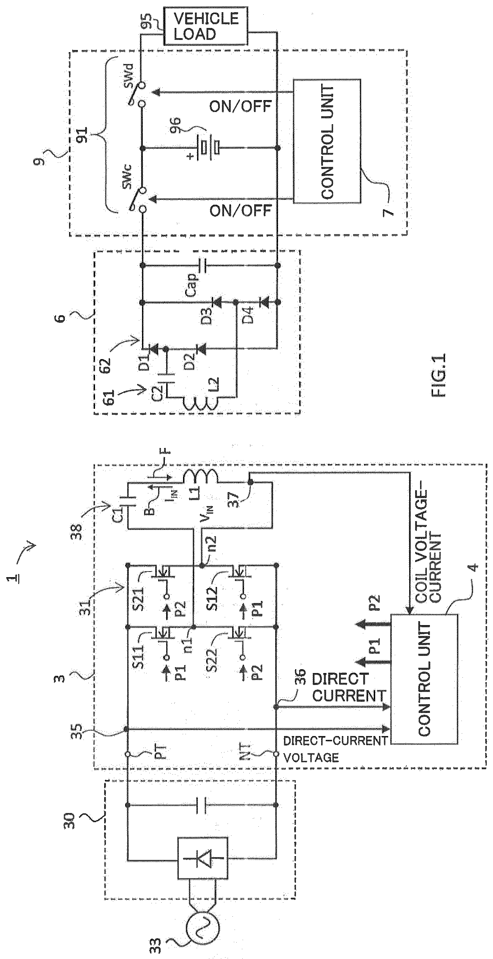

FIG. 1 shows a configuration example of a power supply system including a wireless power supply device according to the embodiment. The power supply system 1 shown in FIG. 1 includes a wireless power supply device 3 (hereinafter, simply referred to as power supply device 3), and a power receiving device 6. The power supply device 3 includes a transmitter resonant circuit 38 having a transmitter coil L1 and a capacitor C1. The capacitor C1 is an example of a transmitter capacitor. The power receiving device 6 includes a receiver resonant circuit 61 having a receiver coil L2 and a capacitor C2. The capacitor C2 is an example of a receiver capacitor. The power supply device 3 and the power receiving device 6 are located apart from each other. Specifically, the transmitter coil L1 of the power supply device 3 and the receiver coil L2 of the power receiving device 6 are respectively housed in different cases. Therefore, the position of the transmitter coil L1 relative to the receiver coil L2 is not fixed, but can vary.

The transmitter coil L1 transmits electric power to the receiver coil L2 in a non-contact manner, that is, wirelessly. When power is transmitted, time-varying current is applied to the transmitter coil L1, thereby inducing an electromotive force in the receiver coil L2. Consequently, power is propagated wirelessly from the transmitter coil L1 to the receiver coil L2. More specifically, the transmitter resonant circuit 38 of the power supply device 3 resonated with an alternating current at a given frequency resonates the resonant circuit of the power receiving device 6 at the same frequency.

### <Configuration Example of Receiver>

In the example shown in FIG. 1, the power receiving device 6 has a rectifier circuit 62 in addition to the receiver resonant circuit 61. The receiver resonant circuit 61 generates an alternating current by means of electromagnetic induction caused by an alternating current from the transmitter resonant circuit 38 of the power supply device 3. The rectifier circuit 62 rectifies and filters the alternating current generated in the receiver resonant circuit 61, and then outputs it. In short, the rectifier circuit 62 converts the received AC power into DC power.

The receiver resonant circuit 61 includes the receiver coil L2 and the capacitor C2. The rectifier circuit 62 includes diodes D1, D2 connected to one of ends of the receiver resonant circuit 61 and situated at opposite sides of the end, respectively, in the same orientation, diodes D3, D4 connected to the other end of the receiver resonant circuit 61 and situated at opposite sides of the end, respectively, in the same orientation, and a capacitor Cap connected in parallel with the diodes D1, D2 and diodes D3, D4. The receiver coil L2 and the capacitor C2 are connected to each other in series between the aforementioned ends of the receiver resonant circuit 61.

The power receiving device 6 is connected to a battery 96. The battery 96 is an example of a load to which power is supplied. This embodiment describes an example in which the power receiving device 6 is connected to a battery unit 9 mounted on a straddled vehicle. The battery unit 9 includes the battery 96 and a battery management unit (hereinafter, a battery management controller 91 (hereinafter referred to as a BMC 91). The power receiving device 6 converts power received at the receiver coil L2 into a direct current suitable for charging the battery 96, and supplies the direct current to the battery 96. The battery 96 is connected to the BMC 91. The BMC 91 monitors the state of the battery 96, and controls the charging and discharging of the battery 96. The BMC 91 includes a control unit 7. The control unit 7 is constituted of a processor, for example, a CPU.

A vehicle load 95 is, for example, a power device, such as a motor of a drive unit mounted on the straddled vehicle, a display device, or the like. In the case where the straddled vehicle is a bicycle, the power device of the drive unit can assist in pedaling. The drive unit receives power supply from the battery 96.

The BMC 91 has a charging switch SWc enabling or disabling charging of the battery 96, and a discharging switch SWd enabling or disabling discharging of the battery 96 to the vehicle load 95. Although not shown in the drawings, the BMC 91 may have a current sensor for detecting the charge/discharge current of the battery, a battery voltage detecting circuit for detecting the voltage of the battery 96, or a temperature sensor for detecting the temperature of the battery. In this case, the control unit 7 can controllably enable or disable charging and discharging based on a receiving voltage, a current of the battery 96, a voltage of the battery 96, and a temperature of the battery 96. The BMC 91 may include a control IC for controlling charging and discharging in addition to the CPU of the control unit 7. The battery 96 includes, for example, a plurality of lithium ion storage battery cells.

In the example shown in FIG. 1, the battery 96 is connected to the power receiving device 6 via the charging switch SWc of the BMC 91, and connected to the vehicle load 95 via the discharging switch SWd. According to the configuration, the BMC 91 can control the connection between the power receiving device 6 and the battery 96. Note that the BMC is sometimes referred to as a battery management unit (BMU) or a battery management system (BMS).

### <Configuration Example of Transmitter>

The power supply device 3 further includes an inverter 31, which is an exemplary drive circuit for driving the transmitter resonant circuit 38, and a control unit 4 controlling the inverter 31. The power supply device 3 is connected to a DC power source 30. The inverter 31 converts direct current from the DC power source 30 into alternating current, and supplies it to the transmitter resonant circuit 38. The inverter 31 (drive circuit) controls the current to be supplied to the transmitter resonant circuit 38 to control the amount and direction of the current flowing through the transmitter coil L1. The transmitter resonant circuit 38 is driven with alternating current from the inverter 31. The transmitter resonant circuit 38 resonates at a drive frequency ω. With the resonance of the transmitter resonant circuit 38, electric power is transmitted from the transmitter coil L1 to the receiver coil L2 of the power receiving device 6.

The inverter 31 includes a positive terminal PT to which a positive electrode of the DC power source 30 is connected, and a negative terminal NT to which a negative electrode of the DC power source 30 is connected. Also, the inverter 31 (drive circuit) includes switching elements S11, S12, S21, S22 used to change the direction of the current output to the transmitter resonant circuit 38. As an example, the inverter 31 is comprised of a full-bridge circuit having the switching elements S11, S21 on an upper arm and the switching elements S22, 12 on a lower arm.

The switching elements S11 and S22 are connected in series between the positive terminal PT and the negative terminal NT. The switching elements S21 and S12 are also connected in series between the positive terminal PT and the negative terminal NT. A terminal n1 on one end of the transmitter resonant circuit 38 is connected between the switching elements S11 and S22. A terminal n2 on the other end of the transmitter resonant circuit 38 is connected between the switching elements S21 and S12. The transmitter coil L1 is connected between the terminal n1 on the one end of the transmitter resonant circuit 38 and the terminal n2 on the other end of the transmitter resonant circuit 38. In other words, the terminal n1 on the one end of the transmitter resonant circuit 38 is connected to one end of the transmitter coil L1, while the terminal n2 on the other end of the transmitter resonant circuit 38 is connected to the other end of the transmitter coil L1.

In the example shown in FIG. 1, the switching element S11 is connected between the positive terminal PT and the terminal n1 on the one end of the transmitter resonant circuit 38, while the switching element S12 is connected between the terminal n2 on the other end of the transmitter resonant circuit 38 and the negative terminal NT. Turning on the switching elements S11 and S12 allows current to flow through the transmitter coil L1 of the transmitter resonant circuit 38 in a first direction F. The switching elements S11 and S12 are taken as an example of a first switching element. By turning on the switching elements S11, S12, a voltage is applied between the terminals n1 and n2 of the transmitter resonant circuit 38 so as to cause a current to flow in one direction F of the transmitter coil L1. In other words, the switching elements S11, S12 in an ON state switches the inverter 31 (drive circuit) such that the current flows through the transmitter coil L1 in the first direction F.

The switching element S21 is connected between the positive terminal PT and the terminal n2 on the other end of the transmitter resonant circuit 38, while the switching element S22 is connected between the terminal n1 on the one end of the transmitter resonant circuit 38 and the negative terminal NT. Turning on the switching elements S21 and S22 allows current to flow through the transmitter coil L1 of the transmitter resonant circuit 38 in a second direction B, which is opposite to the first direction F. The switching elements S21 and S22 are taken as an example of a second switching element. By turning on the switching elements S21, S22, a voltage is applied between the terminals n1 and n2 of the transmitter resonant circuit 38 so as to cause a current to flow in the second direction B of the transmitter coil L1. In other words, the switching elements S21, S22 in an ON state switches the inverter 31 (drive circuit) such that the current flows through the transmitter coil L1 in the second direction B.

Each of the switching elements S11, S12, S21, S22 is controllably turned ON/OFF based on PWM signals from the control unit 4. The switching elements S11, S12 receive input of a first PWM signal P1. The switching elements S21, S22 receive input of a second PWM signal P2. The first PWM signal P1 and the second PWM signal can be a series of repetitive pulses of ON and OFF (high level and low level) with a predetermined period T(=2τ/ω). Under control by the control unit 4, the second PWM signal P2 is OFF when the first PWM signal P1 is ON, and the first PWM signal P1 is OFF when the second PMW signal P2 is ON. This implies that the first PWM signal P1 and the second PWM signal P2 will never be ON simultaneously. However, the first PWM signal P1 and the second PWM signal P2 may be OFF simultaneously.

A unit of time, which includes a time in which the switching elements S11, S12 are ON with the first PWM signal P1 and a time in which the switching elements S21, S22 are ON with the second PWM signal P2, is repeated with a period T. In a period T, the time in which the switching elements S11, S12 are ON and the time in which the switching elements S21, S22 are ON are different from each other. This periodically changes the direction of the current flowing through the transmitter coil L1 of the transmitter resonant circuit 38. As a result, the transmitter resonant circuit 38 is driven at a drive frequency ω.

According to the duty ratio (ratio of time the pulse is ON to one period) of the first PWM signal P1, the amount of the current flowing through the transmitter coil L1 in the first direction F is modulated. According to the duty ratio of the second PWM signal P2, the amount of the current flowing through the transmitter coil L1 in the second direction B is modulated. The control unit 4 changes the duty ratios of the first PWM signal P1 and the second PWM signal P2 according to relative positions of the transmitter coil L1 and the receiver coil L2. This change in the duty ratio controls the current flowing in the first direction F and the current flowing in the second direction B through the transmitter coil L1, individually, according to relative positions of the transmitter coil L1 and the receiver coil L2. Therefore, transmission efficiency deterioration and heat generation in the transmitter coil can be reduced.

For instance, if the relative positions of the transmitter coil L1 and the receiver coil L2 are changed while the transmitter resonant circuit 38 is being driven, the duty ratios of the first PWM signal P1 and the second PWM signal P2 output by the control unit 4 are changed. The control unit 4 can determine the duty ratios with respect to the relative positions in accordance with a program or data stored in a storage unit (memory or the like, not shown) in advance. The control unit 4 can store in advance a program or data, for example, about a correspondence relationship between values representing relative positions and duty ratios of the first PWM signal P1 and a correspondence relationship between values representing relative positions and duty ratios of the second PWM signal P2.

The values representing relative positions to be used to determine the duty ratios may be estimated values. The control unit 4 can determine the duty ratios using, for example, values determined based on current in the transmitter resonant circuit 38 or current in the inverter 31 (drive circuit), that is, the estimated values of the relative positions. The current in the inverter 31 can be, for example, the current flowing through switching elements S11, S12, S21, S22.

Thus, the power supply device 3 can include a coil voltage-current detection unit 37 that detects current and voltage in the transmitter coil L1. The power supply device 3 can also include a direct current detection unit 36 serving as a means of detecting current in the inverter 31 (drive circuit). In the example shown in FIG. 1, the direct current detection unit 36 detects direct current in the inverter 31. The direct current detection unit 36 detects the current in a shunt resistor connected to a node between the negative terminal NT and the switching elements S12, S22 on the lower arm. The control unit 4 can control the duty based on the current detected by the coil voltage-current detection unit 37 and/or the direct current detection unit 36.

In this case, the control unit 4 can determine the duty ratio using the value of the detected current as a value representing a relative position. Alternatively, the control unit 4 can determine the duty ratio based on a value representing a relative position that is obtained by calculation from the detected current value.

Detection of relative positions of the transmitter coil L1 and the receiver coil L2 is not limited to a form using the coil voltage-current detection unit 37 and/or the direct current detection unit 36. For instance, as shown in FIG. 1, a direct-current voltage detection unit 35 that detects direct-current voltage in the inverter 31 may be used. In this case, the control unit 4 can determine the duty ratio using the voltage in the inverter 31. Alternatively, the control unit 4 can also determine the duty ratio using the voltage detected by the coil voltage-current detection unit 37. In summary, the control unit 4 can determine the duty ratio according to relative positions using the current and/or the voltage in the inverter 31 (drive circuit), or the current and/or the voltage in the transmitter coil L1.

Alternatively, the relative positions can be detected by using a sensor provided in the power supply device 3 to detect the position of the receiver coil L2. For instance, the relative positions of the transmitter coil L1 and the receiver coil L2 can be measured by capturing an image with a camera and performing image recognition processing. For instance, a camera can be provided to the power supply device 3. The control unit 4 can recognize the power receiving device 6 (receiver coil L2) in an image captured by the camera, and can calculate the relative positions (e.g., relative distance) of the transmitter coil L1 and the receiver coil L2 based on the recognized information.

Alternatively, it is also possible to measure the relative positions using an infrared ray. For instance, the power supply device 3 may be provided with an infrared sensor. The infrared sensor can detect an infrared ray from the power receiving device 6, and the relative positions (e.g., relative distance) of the transmitter coil L1 and the receiver coil L2 can be calculated based on the detected infrared ray. In addition, visible light or other electromagnetic waves can be used instead of the infrared ray. For instance, an optical sensor provided to the power supply device 3 can detect light from the power receiving device 6, and the control unit 4 can calculate the relative positions based on the light detected by the optical sensor.

Thus, the power supply device 3 can be provided with a relative position detection unit that detects relative positions of the transmitter coil L1 and the receiver coil L2. The relative position detection unit detects the relative positions directly or indirectly. The configuration to detect current or voltage in the transmitter resonant circuit 38 or the inverter 38 (drive circuit) is an exemplary configuration to detect relative positions indirectly. The configuration to measure the relative positions using the camera, the infrared sensor or the optical sensor is an exemplary configuration to detect the relative positions directly.

### <Configuration Example of Transmitter Coil and Receiver Coil>

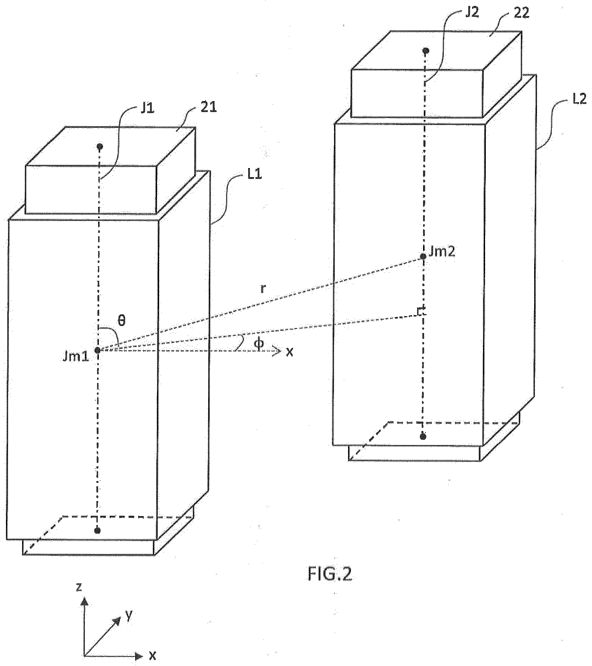

FIG. 2 is a perspective view of a configuration example of the transmitter coil L1 and the receiver coil L2. In the example shown in FIG. 2, the transmitter coil L1 is wound around a core 21, which is an example of a transmitter core. This means that the power supply device 3 includes the core 21 around which a wire of the transmitter coil L1 is wound. The core 21 is in the shape of a column. The transmitter coil L1 is a solenoid-type coil. The receiver coil L2 is also wound around a core 22, which is an example of a receiver core. The receiver coil L2 is also a solenoid-type coil.

The size of the core 21 is not particularly limited. The size of the core 21 and the number of turns of the transmitter coil L1 are appropriately set according to the power to be transmitted by the wireless power supply system 1, the estimated range of variation in the relative position, and some other factors. Similarly, the size of the core 22 of the receiver coil L2 and the number of turns of the receiver coil L2 can be also appropriately set according to power to be transmitted, the estimated range of variations in the relative position, and some other factors. For example, as a guide, to handle approximately 50 watts of power, the length of a central axis J1 of the core 21 can be set to approximately 3 to 25 cm, and the cross-sectional area of a plane perpendicular to the axis direction can be set to approximately 2 to 15 cm². The volume of the core 21 of the transmitter coil L1 is approximately ten or more times greater than that of a core of a coil of a transformer handling an equivalent amount of power.

The relative positions of the transmitter coil L1 and the receiver coil L2 can be represented by, for example, the position of a reference point of the receiver coil L2 or the core 22 with respect to the position of a reference point of the transmitter coil L1 or the core 21. In an example, as shown in FIG. 2, the relative positions can be represented by the position of a midpoint Jm2 of the central axis J2 of the core 22 of the receiver coil L2 with respect to the position of a midpoint Jm1 of the central axis J1 of the core 21 of the transmitter coil L1. In this example, the relative position of the receiver coil L2 with respect to the transmitter coil L1 can be represented by the coordinates (x, y, z) of the midpoint Jm2 on a rectangular coordinate system with the midpoint Jm1 as an origin and the central axis J1 as a z axis. In addition, the relative position of the receiver coil L2 with respect to the transmitter coil L1 can be also represented by the coordinates (r, θ, φ) of the midpoint Jm2 on a polar coordinate with the midpoint Jm1 as an origin. In this example, r denotes the distance between the midpoint Jm1 and the midpoint Jm2. While θ denotes an angle between a line connecting the midpoint Jm1 and the midpoint Jm2 and the z axis, φ denotes an angle between a line, which is obtained by projecting the line connecting the midpoint Jm1 and the midpoint Jm2 on an xy plane, and the x axis. In this case, (x, y, z) or (r, θ, φ) changes as the position of the receiver coil L2 relative to the transmitter coil L1 changes. With the change of (x, y, z) or (r, θ, φ), the current in the transmitter coil L1 or the current flowing through the switching elements S11, S12, S21, S22 in the power supply device 3 changes. Thus, the change in the relative positions can be detected from the current changes.

The shape of the transmitter coil L1 is also not limited to a solenoid type. The transmitter coil L1 can be, for example, a circular type, a figure-8 type, a rectangular configuration, a three-phase wave winding configuration, or other shapes. Specifically, the transmitter coil L1 can be any shape as long as the transmitter coil L1 is configured to wirelessly transmit power to the receiver coil L2 by exciting the core 21 of the transmitter coil L1 using an alternating magnetic field (a magnetic field that alternately changes its direction with alternate directional change of coil current). Similarly, the receiver coil L2 can be any shape other than the solenoid type.

In addition, the shape of the core 21 is not limited to a square pole shown in FIG. 2. For instance, the core 21 can be in the shape of a cylinder. Alternatively, the core 21 can be shaped like, for example, a letter H, or a letter U (or a letter C). The H-shaped or U-shaped core includes, for example, a wound section that is wound with a coil and extends in one direction, and an extending section that extends from opposite ends of the wound section in a direction perpendicular to the direction in which the wound section extends. The H-shaped core includes a pair of extending sections that extend in the directions opposite to each other from each of the opposite ends of the wound section. In the H-shaped or U-shaped core, the coil is wound around a section corresponding to the horizontal line of the H or U. The H-shaped or U-shaped core can be used for a solenoid-type coil. Using an H-shaped core 21 can effectively inhibit the efficiency degradation caused by displacement between the transmitter coil L1 and the receiver coil L2 in a specific direction. In addition, the H-shaped core 21 increases core interlinked magnetic flux, thereby facilitating enhancement of transmission efficiency. Using a U-shaped core 21 can make the gap between the transmitter coil L1 and the receiver coil L2 smaller only by the thickness of the coil at the wound section of the coil. Making the gap smaller can increase the degree of coupling between the transmitter coil L1 and the receiver coil L2. Like the core 21, the core 22 of the receiver coil L2 can also be in any shape.

The inventor has discovered that the use of a solenoid-type transmitter coil L1 makes the effects achieved by controlling the duty ratio according to the relative positions of the transmitter coil L1 and the receiver coil L2 more apparent, or in other words, makes the effects of reducing the transmission efficiency deterioration caused by changes of the relative positions and heat generation in the transmitter coil more apparent. Because of this, a solenoid-type transmitter coil L1 is preferably used.

In a case where the transmitter coil L1 is a figure-8 type coil, for example, the coil is wound in a figure 8 shape as if two circular coils wound in opposite directions are aligned next to each other. In this case, the transmitter coil L1 is formed to have both the solenoid type and circular type features. Forming the coil into a figure 8 shape makes it possible to reduce the thickness of the coil. In a case where the transmitter coil L1 has a rectangular configuration, for example, a plurality of the U-shaped cores are arranged with a coil wound in a rectangular shape (that is alteration of a circular coil into a rectangle). In a case where the transmitter coil L1 has a three-phase wave winding configuration, for example, three wavy wires that are arranged out of phase with each other can be used as the transmitter coil L1. The transmitter coil L1 in the rectangular configuration or the three-phase wave winding configuration can wirelessly supply power in a wide area. The coil in the rectangular configuration or the three-phase wave winding configuration can be applied to a power supply system, for example, capable of supplying power wirelessly while at least one of the receiver device and the transmitter device is moving.

### <Example of PWM Signal>

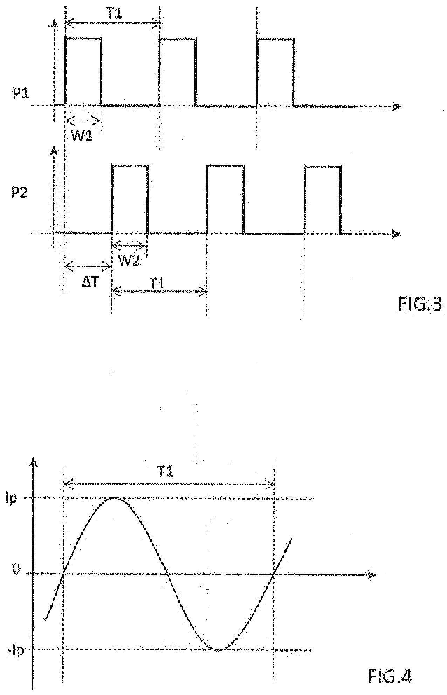

FIG. 3 illustrates examples of signal waveforms of the first and second PWM signals P1, P2. FIG. 4 illustrates an example of a waveform of a current flowing through the transmitter coil L1 when the inverter 31 is driven with the PWM signals P1, P2 shown in FIG. 3. In FIGS. 3 and 4, the vertical axis represents the level of the signals, while the horizontal axis represents time.

In the examples shown in FIG. 3, a pulse (ON-pulse) of a first PWM signal P1 that turns on the switching elements S11, S12 and a pulse (ON-pulse) of the second PWM signal P2 that turns on the switching elements S21, S22 are generated at different times in a period T1. Specifically, when an ON-pulse of the first PWM signal P1 is generated, the second PWM signal P2 is at a level (low level) in which the second switching elements S21, S22 are turned OFF, while an On-pulse of the second PWM signal P2 is generated, the first PWM signal P1 is at a level (low level) in which the first switching elements S11, S12 are turned OFF.

The first PWM signal P1 and the second PWM signal P2 are signals of two systems having ON-pulses at different times. With the signals of two systems, the group of the switching elements S11, S12, and the group of the switching elements S21, S22 are respectively and independently controlled. Specifically, the ON time of the switching elements S11, S12 in a period is controlled by the duty ratio of the first PWM signal P1, while the ON time of the switching elements S21, S22 in a period is controlled by the duty ratio of the second PWM signal P2. Consequently, the control unit 4 can control the amounts of the currents flowing through the transmitter coil L1 in the first direction F and the second direction B respectively and independently.

The duty ratio of the first PWM signal P1 and the duty ratio of the second PWM signal P2 are changed according to the relative positions of the transmitter coil L1 and the receiver coil L2. For instance, the control unit 4 can decrease the duty ratios of the first PWM signal P1 and the second PWM signal P2 with an increase in distance r between the transmitter coil L1 and the receiver coil L2. Thus, if the transmitter coil L1 and the receiver coil L2 are moved away from each other and the coupling degree is lowered, decreasing the duty ratios can reduce the amounts of the currents in the transmitter coil L1, thereby reducing heat generation in the core 21. Alternatively, for example, the control unit 4 can increase the duty ratios of the first PWM signal P1 and the second PWM signal P2 with an increase in the distance r between the transmitter coil L1 and the receiver coil L2. Thus, if the transmitter coil L1 and the receiver coil L2 are moved away from each other and the coupling degree is lowered, increasing the duty ratios can increase the output so as to more reliably transmit power.

The configuration for controlling the duty ratio is not limited to a particular form. The settings to control the duty ratio according to the relative positions can be appropriately adjusted in view of, for example, the configurations of the transmitter resonant circuit 38 on a primary side and the receiver resonant circuit 61 on a secondary side, the estimated range of variations in relative position, the required electric power, and other factors.

As one example of how to control the duty ratios, the control unit 4 can control the duty ratios of the first PWM signal P1 and the second PWM signal P2 so as to decrease the duty ratios with an increase of the detected current in the transmitter coil L1 or the switching elements S11, S12, S21, S22, and increase the duty ratios with a decrease of the detected current. For instance, the control unit 4 can determine the duty ratios based on data indicating the correspondence relationship between the detected currents and duty ratios. With this data, the control unit 4 is allowed to control the duty ratios, such as decreasing the duty ratios when the detected current exceeds a predetermined threshold Th1, and increasing the duty ratios when the detected current is below a predetermined threshold Th2. The duty ratio of the first PWM signal P1 and the duty ratio of the second PWM signal P2 may be equal to or different from each other.

In the examples shown in FIG. 3, the pulse width W1 of the first PWM signal P1 that turns on the switching elements S11, S12 and the pulse width W2 of the second PWM signal P2 that turns on the switching elements S21, S22 are substantially the same. This means that the duty ratio of the first PWM signal P1 and the duty ratio of the second PWM signal P2 are the same. In this case, as shown in FIG. 4, the time in which the current value is positive is approximately equal to the time in which the current value is negative in a period T1. In addition, the amount of the current flowing in a positive direction (first direction F) is also approximately equal to the amount of the current flowing in a negative direction (second direction B) in a period T1.

The inventor conducted tests while regulating the amount of current flowing through the transmitter coil L1 in the first direction F and the amount of current flowing in the second direction B so as to be different from each other in a period, and moving the transmitter coil L1 and receiver coil L2 at various positions. The test results revealed that the transmitter coil L1 generated heat intensely when the transmitter coil L1 and the receiver coil L2 are moved to certain relative positions. To deal with the heat, the inventor adopted PWM signals of two systems as described above, and controlled the pulse width W1 of the first PWM signal P1 and the pulse width W2 of the second PWM signal P2 to be substantially equal as shown in FIG. 3, and consequently found that controlling the pulse width can reduce heat generation in the transmitter coil L1 within an allowable range. In short, heat generation can be effectively reduced by substantially equalizing the pulse width W1 of the first PWM signal P1 with the pulse width W2 of the second PWM signal P2. Even though the pulse widths W1, W2 are not equal, the same effect can be obtained by having the pulse widths W1, W2 be close to a certain extent.

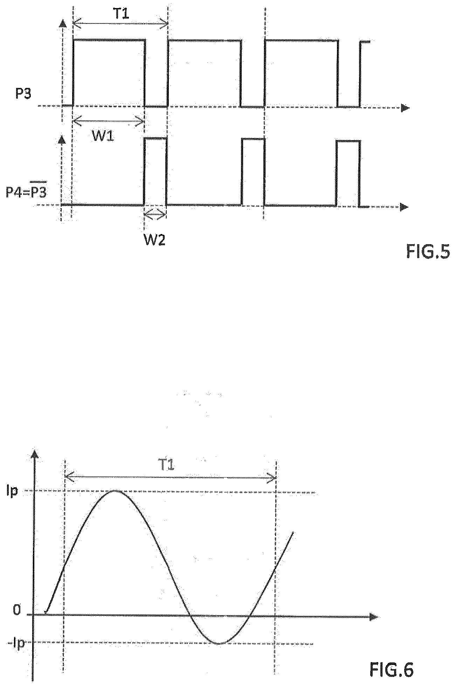

FIG. 5 illustrates examples of waveforms of PWM signals of one system when the inverter 31 shown in FIG. 1 is controlled with the PWM signals. FIG. 6 illustrates an example of a waveform of current flowing through the transmitter coil L1 when the inverter 31 is driven with the PWM signals shown in FIG. 5. In FIGS. 5 and 6, the vertical axis represents the level of the signals, while the horizontal axis represents time.

In the examples shown in FIG. 5, a PWM signal P3 is supplied to the switching elements S11, S12, and a PWM signal P4, which is an inverted signal of the PWM signal P3, is supplied to the switching elements S21, 22. In short, the PWM signals P3, P4 are generated from a signal of one system. In this case, if the duty ratios are set to other than 50%, the amount of the current flowing through the transmitter coil L1 in a positive direction (first direction F) differs from the amount of the current flowing through the transmitter coil L1 in a negative direction (second direction B) in a period T1, as shown in FIG. 6. Therefore, changing the duty ratios according to relative positions of the transmitter coil L1 and the receiver coil L2 using the PWM signals of one system tends to cause directional imbalance of the currents flowing through the transmitter coil L1. Consequently, the transmitter coil L1 is prone to generate heat.

On the other hand, the PWM signals P1, P2 of two systems as used in this embodiment can effectively control the duty ratios according to relative positions of the transmitter coil L1 and the receiver coil L2 and reduce heat generation in the transmitter coil L1.

With reference to FIG. 3 again, the first PWM signal P1 and the second PWM signal P2 in the examples of FIG. 3 are in the opposite phase. Specifically, the time difference ΔT between the rising edge of the pulse of the first PWM signal P1 and the rising edge of the pulse of the second PWM signal P2 is a half period (T1/2). The time difference ΔT corresponds to a phase difference of 180 degrees. By allowing the first PWM signal P1 and the second PWM signal P2 to have opposite phases, the pulses of the first PWM signal P1 occur at different times from the pulses of the second PWM signal P2, and the variable ranges of the respective duty ratios can be expanded. For instance, in the examples shown in FIG. 3, each of the duty ratios of the first PWM signal P1 and the second PWM signal P2 can be changed in a range from 0% to 50%.

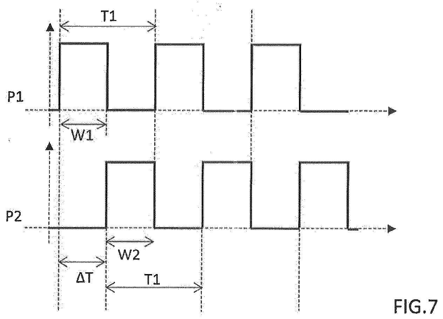

FIG. 7 illustrates examples of waveforms of the first PWM signal P1 and the second PWM signal whose duty ratios are both set to 50%. In the examples shown in FIG. 7, the pulse width W1 of the first PWM signal P1 and the pulse width W2 of the second PMW signal P2 both correspond to the pulse width of a signal with a 50% duty ratio. Setting the duty ratios of both the first PWM signal P1 and the second PWM signal to 50% can feed the maximum amount of current while maintaining the balance between the currents flowing through the transmitter coil L1 in the first direction F and the second direction B.

Thus, the duty ratios can be changed according to relative positions such that both of the first PWM signal P1 and the second PWM signal have a duty ratio of 50% for a period of time. The duty ratio change makes it possible to provide control of power transmission over a broad range.

In the above-described embodiment, the control unit detects a physical quantity that changes according to relative positions of the transmitter coil and the receiver coil, and changes the duty ratio of the first PWM signal and the duty ratio of the second PWM signal according to the detected physical quantity. As described above, the physical quantity that changes according to relative positions of the transmitter coil and the receiver coil may be at least one of current and voltage that changes according to the relative positions. Alternatively, the control unit can obtain the physical quantity that changes according to relative positions of the transmitter coil and the receiver coil by physically detecting the relative positions of the transmitter coil and the receiver coil. For instance, as in the above-described examples, the relative positions of the transmitter coil and the receiver coil can be detected using an image captured by a camera, infrared rays, an optical sensor, ultrasound waves, radar, or other types of electromagnetic waves.

In this teaching, the relative positions of the transmitter coil and the receiver coil can be represented by at least one of values of, for example, the distance between representative points of the transmitter coil and the receiver coil, the amount of deviation or overlap of the transmitter coil and the receiver coil as viewed from one direction, the orientation of the axis of the transmitter core around which the transmitter coil is wound and the orientation of the axis of the receiver core around which the receiver coil is wound, and any other values relating to the coupling degrees.

The above-described embodiment describes an example of how the control unit controls the duty ratios of the first and second PWM signals. In the example, when the relative positions of the transmitter coil and the receiver coil are changed to increase the coupling degree between the transmitter coil and the receiver coil, the control unit may occasionally increase the duty ratios of the first PWM signal and the second PWM signal, and when the relative positions are changed to decrease the coupling degree of the transmitter coil and the receiver coil, the control unit may occasionally decrease the duty ratios of the first PWM signal and the second PWM signal.

In another example, when the relative positions of the transmitter coil and the receiver coil are changed to increase the coupling degree between the transmitter coil and the receiver coil, the control unit may occasionally decrease the duty ratios of the first PWM signal and the second PWM signal, and when the relative positions are changed to decrease the coupling degree between the transmitter coil and the receiver coil, the control unit may occasionally increase the duty ratios of the first PWM signal and the second PWM signal.

In addition to the aforementioned examples, when the relative positions of the transmitter coil and the receiver coil are changed to increase the coupling degree between the transmitter coil and the receiver coil, the control unit may increase the duty ratios of the first PWM signal and the second PWM signal, and when the relative positions are changed to decrease the coupling degree of the transmitter coil and the receiver coil, the control unit may increase the duty ratios of the first PWM signal and the second PWM signal. Alternatively, when the relative positions of the transmitter coil and the receiver coil are changed to increase the coupling degree between the transmitter coil and the receiver coil, the control unit may decrease the duty ratios of the first PWM signal and the second PWM signal, and when the relative positions are changed to decrease the coupling degree between the transmitter coil and the receiver coil, the control unit may decrease the duty ratios of the first PWM signal and the second PWM signal.

It is noted that the situation in which the relative positions of the transmitter coil and the receiver coil are changed to increase the coupling degree between the transmitter coil and the receiver coil includes a situation, for example, in which a change in physical quantity associated with the relative positions of the transmitter coil and the receiver coil indicates that the relative positions have been changed to increase the coupling degree between the transmitter coil and the receiver coil.

### (Modification)

The pulse width of the first PWM signal and the pulse width of the second PWM signal are regarded as equal to each other when the pulse width of the first PWM signal is exactly equal to the pulse width of the second PWM signal, and also when the pulse width of the first PWM signal is different from the pulse width of the second PWM signal, but the difference is small enough to be deemed equal. For instance, first and second PWM signals that are slightly different in pulse width, but function similarly enough to control the switching elements are regarded as having the same pulse widths.

The first PWM signal and the second PWM signal are regarded as being in the opposite phase when the phase difference between the first PWM signal and the second PWM signal is exactly 180 degrees, and also when the phase difference is nearly 180 degrees. For instance, if the phase difference between the first PWM signal and the second PWM signal is not 180 degrees, but the error is negligible from the viewpoint of functionality, the first PWM signal and the second PWM signal can be regarded as having a phase difference of 180 degrees.

The current flows through the transmitter coil in the first direction while the first switching element is ON; however, the current may not need to always flow in the first direction over the entire time period in which the first switching element is ON. The current may not flow in the first direction for some time during the time period in which the first switching element is ON. Likewise, the current flows through the transmitter coil in the second direction while the second switching element is ON; however, the current does not need to always flow in the second direction over the entire time period in which the second switching element is ON. The current may not flow in the second direction for some time during the time period in which the second switching element is ON.

The configuration of the drive circuit including the first switching element and the second switching element is not limited to the aforementioned inverter. The drive circuit can be configured in the form of, for example, either a half bridge circuit or a full bridge circuit.

The configuration of the transmitter resonant circuit 38 on the primary side is not limited to the aforementioned example. The transmitter coil L1 and the capacitor C1 in the above-described example are connected to each other in series; however, for example, the capacitor C1 may be connected to the transmitter coil L1 in parallel. In addition, the configuration of the receiver resonant circuit 61 on the secondary side is not limited to the aforementioned example. For instance, the capacitor C2 may be connected to the receiver coil L2 in parallel.

In the example shown in FIG. 1, the power supply device 3 is configured to detect the voltage and current in the transmitter coil L1; however, the power supply device 3 can be configured to detect either one of the current and voltage in the transmitter coil L1. Alternatively, the power supply device 3 can be configured to detect either one of the direct current and the direct-current voltage in the inverter 31.

The wireless power supply device of this embodiment can be applied to any wireless power supply systems, in addition to the wireless power supply system for straddled vehicles. For instance, the wireless power supply device of the above-describe embodiment can be applied to wireless power supply devices for wirelessly supplying power to automobiles and railroad vehicles, and also wireless power supply devices for wirelessly supplying power to electronic devices.

### REFERENCE SIGNS LIST

- 1: power supply system
- 3: power supply device
- 4: control unit
- 6: power receiving device
- 38: resonant circuit
- 61: resonant circuit
- L1: transmitter coil
- L2: receiver coil
- C1: capacitor
- C2: capacitor
- S11, 12: first switching element
- S21, 22: second switching element
- P1: first PWM signal
- P2: second PWM signal

## Claims

1. A wireless power supply device (3) having a transmitter coil (L1) wirelessly transmitting electric power to a receiver coil (L2), comprising:
a transmitter resonant circuit (38) including a transmitter capacitor (C1) and the transmitter coil (L1);
a transmitter core (21) around which the transmitter coil (L1) is wound;
a drive circuit (31) configured to control a current to be supplied to the transmitter resonant circuit (38), and including a first switching element (S11, S12) controllably turned ON/OFF based on a first PWM signal (P1), and a second switching element (S21, S22) controllably turned ON/OFF based on a second PWM signal (P2); and
a control unit (4) configured to supply the first PWM signal (P1) to the first switching element (S11, S12), and supplying the second PWM signal (P2) to the second switching element (S21, S22), wherein
the first switching element (S11, S12) is configured to switch the drive circuit (31) such that a current flows through the transmitter coil (L1) in a first direction when the first switching element (S11, S12) is ON,
the second switching element (S21, S22) is configured to switch the drive circuit (31) such that the current flows through the transmitter coil (L1) in a second direction, which is opposite to the first direction, when the second switching element (S21, S22) is ON,
the control unit (4) is configured to detect a physical quantity that changes according to relative positions of the transmitter coil (L1) and the receiver coil (L2) whose current flowing therethrough changes with a change of the current flowing through the transmitter coil (L1), and, based on the detected physical quantity, and to change a duty ratio of the first PWM signal (P1), which is supplied to the first switching element (S11, S12) to switch ON/OFF the current flowing through the transmitter coil (L1) in the first direction, and a duty ratio of the second PWM signal (P2), which is supplied to the second switching element (S21, S22) to switch ON/OFF the current flowing through the transmitter coil (L1) in the second direction, and
the physical quantity is a current and/or a voltage in the transmitter resonant circuit (38) or in the drive circuit (31), and
the first PWM signal (P1) and the second PWM signal (P2) are two independent signals which control the first switching element (S11, S12) and second switching element (SS21, S22) independently.

2. The wireless power supply device (3) according to claim 1, wherein
a pulse width of the first PWM signal (P1) that turns ON the first switching element (S11, S12) and a pulse width of the second PWM signal (P2) that turns ON the second switching element (S21, S22) are substantially equal to each other.

3. The wireless power supply device (3) according to claim 1 or 2, wherein
the first PWM signal (P1) and the second PWM signal (P2) are in opposite phase.

4. The wireless power supply device (3) according to claim 3, wherein
both the first PWM signal (P1) and the second PWM signal (P2) have a duty ratio of 50% for a period of time.

5. The wireless power supply device (3) according to any one of claims 1 to 4, wherein
the transmitter coil (L1) is a solenoid-type coil.

6. The wireless power supply device (3) according to any one of claims 1 to 5, wherein
when the control unit (4) detects a change in the physical quantity that changes according to the relative positions of the transmitter coil (L1) and the receiver coil (L2), the control unit (4) is configured to change the duty ratio of the first PWM signal (P1) and the duty ratio of the second PWM signal (P2) according to the change in the physical quantity.

7. The wireless power supply device (3) according to any one of claims 1 to 6, wherein the control unit (4) is configured to
increase the duty ratios of the first PWM signal (P1) and the second PWM signal (P2) when the relative positions of the transmitter coil (L1) and the receiver coil (L2) are changed to increase a coupling degree between the transmitter coil (L1) and the receiver coil (L2), and
decrease the duty ratios of the first PWM signal (P1) and the second PWM signal (P2) when the relative positions of the transmitter coil (L1) and the receiver coil (L2) are changed to decrease the coupling degree between the transmitter coil (L1) and the receiver coil (L2).

8. The wireless power supply device (3) according to any one of claims 1 to 6, wherein the control unit (4) is configured to
decrease the duty ratios of the first PWM signal (P1) and the second PWM signal (P2) when the relative positions of the transmitter coil (L1) and the receiver coil (L2) are changed to increase the coupling degree between the transmitter coil (L1) and the receiver coil (L2), and
increase the duty ratios of the first PWM signal (P1) and the second PWM signal (P2) when the relative positions of the transmitter coil (L1) and the receiver coil (L2) are changed to decrease the coupling degree between the transmitter coil (L1) and the receiver coil (L2).

9. The wireless power supply device (3) according to any one of claims 1 to 8, wherein the ON time of the first switching element (S11, S12) in a period is controlled by the first duty ratio of the first PWM signal (P1), while the ON time of the second switching element (S21, S22) in a period is controlled by the second duty ratio of the second PWM signal( P2).

10. A method for controlling a wireless power supply device (3) that includes a transmitter resonant circuit (38) having a capacitor and a transmitter coil (L1) and a transmitter core (21) around which the transmitter coil (L1) is wound, and transmits electric power wirelessly from the transmitter coil (L1) to a receiver coil (L2), the method comprising the steps of:
controlling ON/OFF of a first switching element (S11, S12) based on a first PWM signal (P1) and feeding a current through the transmitter coil (L1) in a first direction when the first switching element (S11, S12) is ON; and
controlling ON/OFF of a second switching element (S21, S22) based on a second PWM signal (P2) and feeding a current through the transmitter coil (L1) in a second direction, which is opposite to the first direction, when the second switching element (S21, S22) is ON, wherein
a physical quantity is detected that changes according to relative positions of the transmitter coil (L1) and the receiver coil (L2) whose current flowing therethrough changes with a change of the current flowing through the transmitter coil(L1), and, based on the detected physical quantity, and a duty ratio of the first PWM signal (P1), which is supplied to the first switching element (S11, S12) to switch ON/OFF the current flowing through the transmitter coil (L1) in the first direction, and a duty ratio of the second PWM signal (P2), which is supplied to the second switching element (S21, S22) to switch ON/OFF the current flowing through the transmitter coil (L1) in the second direction, are changed, and
the physical quantity is a current and/or a voltage in the transmitter resonant circuit (38) or in a drive circuit (31) configured to control a current to be supplied to the transmitter resonant circuit (38), and
the first PWM signal (P1) and the second PWM signal (P2) are two independent signals which control the first switching element (S11, S12) and second switching element (SS21, S22) independently.

## Patentansprüche

1. Eine drahtlose Leistungsversorgungsvorrichtung (3) mit einer Senderspule (L1), die elektrische Leistung drahtlos an eine Empfängerspule (L2) sendet, die folgende Merkmale aufweist:
eine Senderresonanzschaltung (38), die einen Senderkondensator (C1) und die Senderspule (L1) umfasst;
einen Senderkern (21), um den die Senderspule (L1) gewickelt ist;
eine Treiberschaltung (31), die dazu konfiguriert ist, einen Strom zu steuern, der der Senderresonanzschaltung (38) zuzuführen ist, und die ein erstes Schaltelement (S11, S12), das basierend auf einem ersten PWM-Signal (P1) steuerbar EIN/AUSgeschaltet wird, und ein zweites Schaltelement (S21, S22) umfasst, das basierend auf einem zweiten PWM-Signal (P2) steuerbar EIN/AUS-geschaltet wird; und
eine Steuereinheit (4), die dazu konfiguriert ist, das erste PWM-Signal (P1) dem ersten Schaltelement (S11, S12) zuzuführen, und das zweite PWM-Signal (P2) dem zweiten Schaltelement (S21, S22) zuzuführen, wobei
das erste Schaltelement (S11, S12) dazu konfiguriert ist, die Treiberschaltung (31) derart zu schalten, dass ein Strom in einer ersten Richtung durch die Senderspule (L1) fließt, wenn das erste Schaltelement (S11, S12) EIN ist,
das zweite Schaltelement (S21, S22) dazu konfiguriert ist, die Treiberschaltung (31) derart zu schalten, dass der Strom in einer zweiten Richtung durch die Senderspule (L1) fließt, die der ersten Richtung entgegengesetzt ist, wenn das zweite Schaltelement (S21, S22) EIN ist,
die Steuereinheit (4) dazu konfiguriert ist, eine physikalische Größe zu erfassen, die sich gemäß relativen Positionen der Senderspule (L1) und der Empfängerspule (L2) ändert, deren durch dieselben fließender Strom sich mit einer Änderung des durch die Senderspule (L1) fließenden Stroms ändert, und basierend auf der erfassten physikalischen Größe ein Tastverhältnis des ersten PWM-Signals (P1), das dem ersten Schaltelement (S11, S12) zugeführt wird, um den in der ersten Richtung durch die Senderspule (L1) fließenden Strom EIN/AUS-zuschalten, und ein Tastverhältnis des zweiten PWM-Signals (P2), das dem zweiten Schaltelement (S21, S22) zugeführt wird, um den in der zweiten Richtung durch die Senderspule (L1) fließenden Strom EIN/AUS-zuschalten, zu ändern, und
die physikalische Größe ein Strom und/oder eine Spannung in der Senderresonanzschaltung (38) oder in der Treiberschaltung (31) ist, und
das erste PWM-Signal (P1) und das zweite PWM-Signal (P2) zwei unabhängige Signale sind, die das erste Schaltelement (S11, S12) und das zweite Schaltelement (S21, S22) unabhängig steuern.

2. Die drahtlose Leistungsversorgungsvorrichtung (3) gemäß Anspruch 1, bei der
eine Pulsbreite des ersten PWM-Signals (P1), das das erste Schaltelement (S11, S12) EIN-schaltet, und eine Pulsbreite des zweiten PWM-Signals (P2), das das zweite Schaltelement (S21, S22) EIN-schaltet, im Wesentlichen gleich zueinander sind.

3. Die drahtlose Leistungsversorgungsvorrichtung (3) gemäß Anspruch 1 oder 2, bei der
das erste PWM-Signal (P1) und das zweite PWM-Signal (P2) gegenphasig sind.

4. Die drahtlose Leistungsversorgungsvorrichtung (3) gemäß Anspruch 3, bei der
sowohl das erste PWM-Signal (P1) als auch das zweite PWM-Signal (P2) für einen Zeitraum ein Tastverhältnis von 50% haben.

5. Die drahtlose Leistungsversorgungsvorrichtung (3) gemäß einem der Ansprüche 1 bis 4, bei der
die Senderspule (L1) eine Spule vom Solenoidtyp ist.

6. Die drahtlose Leistungsversorgungsvorrichtung (3) gemäß einem der Ansprüche 1 bis 5, bei der
wenn die Steuereinheit (4) eine Änderung der physikalischen Größe erfasst, die sich gemäß den relativen Positionen der Senderspule (L1) und der Empfängerspule (L2) ändert, die Steuereinheit (4) dazu konfiguriert ist, das Tastverhältnis des ersten PWM-Signals (P1) und das Tastverhältnis des zweiten PWM-Signals (P2) gemäß der Änderung der physikalischen Größe zu ändern.

7. Die drahtlose Leistungsversorgungsvorrichtung (3) gemäß einem der Ansprüche 1 bis 6, bei der die Steuereinheit (4) konfiguriert ist zum
Erhöhen der Tastverhältnisse des ersten PWM-Signals (P1) und des zweiten PWM-Signals (P2), wenn die relativen Positionen der Senderspule (L1) und der Empfängerspule (L2) geändert werden, um einen Kopplungsgrad zwischen der Senderspule (L1) und der Empfängerspule (L2) zu erhöhen, und
Verringern der Tastverhältnisse des ersten PWM-Signals (P1) und des zweiten PWM-Signals (P2), wenn die relativen Positionen der Senderspule (L1) und der Empfängerspule (L2) geändert werden, um den Kopplungsgrad zwischen der Senderspule (L1) und der Empfängerspule (L2) zu verringern.

8. Die drahtlose Leistungsversorgungsvorrichtung (3) gemäß einem der Ansprüche 1 bis 6, bei der die Steuereinheit (4) konfiguriert ist zum
Verringern der Tastverhältnisse des ersten PWM-Signals (P1) und des zweiten PWM-Signals (P2), wenn die relativen Positionen der Senderspule (L1) und der Empfängerspule (L2) geändert werden, um den Kopplungsgrad zwischen der Senderspule (L1) und der Empfängerspule (L2) zu erhöhen, und
Erhöhen der Tastverhältnisse des ersten PWM-Signals (P1) und des zweiten PWM-Signals (P2), wenn die relativen Positionen der Senderspule (L1) und der Empfängerspule (L2) geändert werden, um den Kopplungsgrad zwischen der Senderspule (L1) und der Empfängerspule (L2) zu verringern.

9. Die drahtlose Leistungsversorgungsvorrichtung (3) gemäß einem der Ansprüche 1 bis 8, bei der die EIN-Zeit des ersten Schaltelements (S11, S12) in einer Periode durch das erste Tastverhältnis des ersten PWM-Signals (P1) gesteuert wird, während die EIN-Zeit des zweiten Schaltelements (S21, S22) in einer Periode durch das zweite Tastverhältnis des zweiten PWM-Signals (P2) gesteuert wird.

10. Ein Verfahren zum Steuern einer drahtlosen Leistungsversorgungsvorrichtung (3), die eine Senderresonanzschaltung (38) mit einem Kondensator und einer Senderspule (L1) und einem Senderkern (21), um den die Senderspule (L1) gewickelt ist, aufweist und elektrische Leistung drahtlos von der Senderspule (L1) an eine Empfängerspule (L2) sendet, wobei das Verfahren folgende Schritte aufweist:
Steuern von EIN/AUS eines ersten Schaltelements (S11, S12) basierend auf einem ersten PWM-Signal (P1) und Zuführen eines Stroms durch die Senderspule (L1) in einer ersten Richtung, wenn das erste Schaltelement (S11, S12) EIN ist; und
Steuern von EIN/AUS eines zweiten Schaltelements (S21, S22) basierend auf einem zweiten PWM-Signal (P2) und Zuführen eines Stroms durch die Senderspule (L1) in einer zweiten Richtung, die der ersten Richtung entgegengesetzt ist, wenn das zweite Schaltelement (S21, S22) EIN ist, wobei
eine physikalische Größe erfasst wird, die sich gemäß relativen Positionen der Senderspule (L1) und der Empfängerspule (L2) ändert, deren durch dieselben fließender Strom sich mit einer Änderung des durch die Senderspule (L1) fließenden Stroms ändert, und basierend auf der erfassten physikalischen Größe ein Tastverhältnis des ersten PWM-Signals (P1), das dem ersten Schaltelement (S11, S12) zugeführt wird, um den in der ersten Richtung durch die Senderspule (L1) fließenden Strom EIN/AUS-zuschalten, und ein Tastverhältnis des zweiten PWM-Signals (P2), das dem zweiten Schaltelement (S21, S22) zugeführt wird, um den in der zweiten Richtung durch die Senderspule (L1) fließenden Strom EIN/AUS-zuschalten, geändert werden, und
die physikalische Größe ein Strom und/oder eine Spannung in der Senderresonanzschaltung (38) oder in einer Treiberschaltung (31) ist, die dazu konfiguriert ist, einen Strom zu steuern, der der Senderresonanzschaltung (38) zuzuführen ist, und
das erste PWM-Signal (P1) und das zweite PWM-Signal (P2) zwei unabhängige Signale sind, die das erste Schaltelement (S11, S12) und das zweite Schaltelement (S21, S22) unabhängig steuern.

## Revendications

1. Dispositif d'alimentation de puissance sans fil (3) présentant une bobine d'émission (L1) transmettant sans fil de la puissance électrique à une bobine de réception (L2), comprenant :
un circuit résonnant d'émission (38) incluant un condensateur d'émission (C1) et la bobine d'émission (L1) ;
un noyau d'émetteur (21) autour duquel la bobine d'émetteur (L1) est enroulée ;
un circuit de commande (31) configuré pour commander un courant à fournir au circuit résonnant d'émission (38), et incluant un premier élément de commutation (S11, S12) activé/désactivé de manière contrôlable sur la base d'un premier signal PWM (P1), et un deuxième élément de commutation (S21, S22) activé/désactivé de manière contrôlable sur la base d'un deuxième signal PWM (P2) ; et
une unité de commande (4) configurée pour fournir le premier signal PWM (P1) au premier élément de commutation (S11, S12), et pour fournir le deuxième signal PWM (P2) au deuxième élément de commutation (S21, S22), dans laquelle
le premier élément de commutation (S11, S12) est configuré pour commuter le circuit de commande (31) de telle sorte qu'un courant circule à travers la bobine d'émission (L1) dans une première direction lorsque le premier élément de commutation (S11, S12) est activé,
le deuxième élément de commutation (S21, S22) est configuré pour commuter le circuit de commande (31) de telle sorte que le courant circule dans la bobine d'émission (L1) dans une deuxième direction, qui est opposée à la première direction, lorsque le deuxième élément de commutation (S21, S22) est activé,
l'unité de commande (4) est configurée pour détecter une grandeur physique qui change selon des positions relatives de la bobine d'émission (L1) et de la bobine de réception (L2) dont le courant circulant à travers celles-ci change avec un changement du courant circulant à travers la bobine d'émission (L1), et, sur la base de la grandeur physique détectée, et pour changer un rapport cyclique du premier signal PWM (P1), qui est fourni au premier élément de commutation (S11, S12) pour activer/désactiver le courant circulant à travers la bobine d'émission (L1) dans la première direction, et un rapport cyclique du deuxième signal PWM (P2), qui est fourni au deuxième élément de commutation (S21, S22) pour activer/désactiver le courant circulant à travers la bobine d'émission (L1) dans la deuxième direction, et
la grandeur physique est un courant et/ou une tension dans le circuit résonnant d'émission (38) ou dans le circuit de commande (31), et
le premier signal PWM (P1) et le deuxième signal PWM (P2) sont deux signaux indépendants qui commandent le premier élément de commutation (S11, S12) et le deuxième élément de commutation (S21, S22) indépendamment.

2. Dispositif d'alimentation de puissance sans fil (3) selon la revendication 1, dans lequel
une largeur d'impulsion du premier signal PWM (P1) qui active le premier élément de commutation (S11, S12) et une largeur d'impulsion du deuxième signal PWM (P2) qui active le deuxième élément de commutation (S21, S22) sont sensiblement égales l'une à l'autre.

3. Dispositif d'alimentation de puissance sans fil (3) selon la revendication 1 ou 2, dans lequel
le premier signal PWM (P1) et le deuxième signal PWM (P2) sont en opposition de phase.

4. Dispositif d'alimentation de puissance sans fil (3) selon la revendication 3, dans lequel
le premier signal PWM (P1) et le deuxième signal PWM (P2) présentent tous deux un rapport cyclique de 50 % pendant une période de temps.

5. Dispositif d'alimentation de puissance sans fil (3) selon l'une quelconque des revendications 1 à 4, dans lequel
la bobine d'émission (L1) est une bobine de type solénoïde.

6. Dispositif d'alimentation de puissance sans fil (3) selon l'une quelconque des revendications 1 à 5, dans lequel
lorsque l'unité de commande (4) détecte un changement dans la grandeur physique qui change selon les positions relatives de la bobine d'émission (L1) et de la bobine de réception (L2), l'unité de commande (4) est configurée pour changer le rapport cyclique du premier signal PWM (P1) et le rapport cyclique du deuxième signal PWM (P2) selon le changement dans la grandeur physique.

7. Dispositif d'alimentation de puissance sans fil (3) selon l'une quelconque des revendications 1 à 6, dans lequel l'unité de commande (4) est configurée pour
augmenter les rapports cycliques du premier signal PWM (P1) et du deuxième signal PWM (P2) lorsque les positions relatives de la bobine d'émission (L1) et de la bobine de réception (L2) sont changées pour augmenter un degré de couplage entre la bobine d'émission (L1) et la bobine de réception (L2), et
réduire les rapports cycliques du premier signal PWM (P1) et du deuxième signal PWM (P2) lorsque les positions relatives de la bobine d'émission (L1) et de la bobine de réception (L2) sont changées pour réduire le degré de couplage entre la bobine d'émission (L1) et la bobine de réception (L2).

8. Dispositif d'alimentation de puissance sans fil (3) selon l'une quelconque des revendications 1 à 6, dans lequel l'unité de commande (4) est configurée pour
réduire les rapports cycliques du premier signal PWM (P1) et du deuxième signal PWM (P2) lorsque les positions relatives de la bobine d'émission (L1) et de la bobine de réception (L2) sont changées pour augmenter le degré de couplage entre la bobine d'émission (L1) et la bobine de réception (L2), et
augmenter les rapports cycliques du premier signal PWM (P1) et du deuxième signal PWM (P2) lorsque les positions relatives de la bobine d'émission (L1) et de la bobine de réception (L2) sont changées pour réduire le degré de couplage entre la bobine d'émission (L1) et la bobine de réception (L2).

9. Dispositif d'alimentation de puissance sans fil (3) selon l'une quelconque des revendications 1 à 8, dans lequel le temps d'activation du premier élément de commutation (S11, S12) dans une période est commandée par le premier rapport cyclique du premier signal PWM (P1), tandis que le temps d'activation du deuxième élément de commutation (S21, S22) dans une période est commandé par le deuxième rapport cyclique du deuxième signal PWM (P2).

10. Procédé de commande d'un dispositif d'alimentation de puissance sans fil (3) qui inclut un circuit résonnant d'émission (38) présentant un condensateur et une bobine d'émission (L1) et un noyau d'émission (21) autour duquel la bobine d'émission (L1) est enroulée, et qui transmet de la puissance électrique sans fil depuis la bobine d'émission (L1) vers une bobine de réception (L2), le procédé comprenant les étapes consistant à :
commander l'activation/désactivation d'un premier élément de commutation (S11, S12) sur la base d'un premier signal PWM (P1) et introduire un courant à travers la bobine d'émission (L1) dans une première direction lorsque le premier élément de commutation (S11, S12) est activé ; et
commander l'activation/désactivation d'un deuxième élément de commutation (S21, S22) sur la base d'un deuxième signal PWM (P2) et introduire un courant à travers la bobine d'émission (L1) dans une deuxième direction, qui est opposée à la première direction, lorsque le deuxième élément de commutation (S21, S22) est activé, dans lequel
une grandeur physique est détectée, laquelle change selon des positions relatives de la bobine d'émission (L1) et de la bobine de réception (L2) dont le courant circulant à travers celles-ci change avec un changement du courant circulant à travers la bobine d'émission (L1) ; et, sur la base de la grandeur physique détectée, et d'un rapport cyclique du premier signal PWM (P1), qui est fourni au premier élément de commutation (S11, S12) pour activer/désactiver le courant circulant à travers la bobine d'émission (L1) dans la première direction, et un rapport cyclique du deuxième signal PWM (P2), qui est fourni au deuxième élément de commutation (S21, S22) pour activer/désactiver le courant circulant dans la bobine d'émission (L1) dans la deuxième direction, sont changés, et
la grandeur physique est un courant et/ou une tension dans le circuit résonnant d'émission (38) ou dans un circuit de commande (31) configuré pour commander un courant à fournir au circuit résonnant d'émission (38), et
le premier signal PWM (P1) et le deuxième signal PWM (P2) sont deux signaux indépendants qui commandent le premier élément de commutation (S11, S12) et le deuxième élément de commutation (S21, S22) indépendamment.
